(19) Europäisches Patentamt
European Patent Office
Office européen des brevets

(11) **EP 4 276 697 A1**

(12) **EUROPEAN PATENT APPLICATION**
published in accordance with Art. 153(4) EPC

(43) Date of publication:
**15.11.2023 Bulletin 2023/46**

(21) Application number: **21922375.7**

(22) Date of filing: **18.10.2021**

(51) International Patent Classification (IPC):
**G06N 3/067** (2006.01)

(52) Cooperative Patent Classification (CPC):
**G06N 3/067**

(86) International application number:
**PCT/CN2021/124511**

(87) International publication number:
**WO 2022/160784 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2021 CN 202110137148**
**08.05.2021 CN 202110502270**

(71) Applicant: **Huawei Technologies Co., Ltd.**
**Shenzhen, Guangdong 518129 (CN)**

(72) Inventors:
• **CHU, Yayan**
**Shenzhen, Guangdong 518129 (CN)**
• **DONG, Xiaowen**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **OPTICAL COMPUTING DEVICE AND SYSTEM AND CONVOLUTION COMPUTING METHOD**

(57)     An optical computing apparatus and system, and a convolution computing method are disclosed, and are applied to the field of artificial neural networks. The optical computing apparatus (100) includes a light source array (102), a modulator array (104), and a wavelength router (106). The light source array (102) is configured to send a plurality of groups of optical signals based on first data to be computed. The modulator array (104) includes a plurality of modulators. The modulator array (104) is configured to: receive the plurality of groups of optical signals, and output a plurality of intermediate optical signals based on modulated second data. The wavelength router (106) is configured to: receive the plurality of intermediate optical signals output by the modulator array (104), and output the plurality of intermediate optical signals from a plurality of output ports based on wavelengths and input ports corresponding to the plurality of intermediate optical signals. A plurality of optical signals output by the plurality of output ports are used to indicate a computing result of the first data and the second data. Therefore, the optical computing apparatus (100) can improve computing efficiency.

FIG. 1

## Description

This application claims priority to Chinese Patent Application No. 202110502270.2, filed with the China National Intellectual Property Administration on May 8, 2021 and entitled "OPTICAL COMPUTING APPARATUS AND SYSTEM, AND CONVOLUTION COMPUTING METHOD", which is incorporated herein by reference in its entirety.

## TECHNICAL FIELD

This application relates to the field of optical computing technologies, and in particular, to an optical computing apparatus and system, and a convolution computing method.

## BACKGROUND

An artificial neural network (Artificial Neural Network, ANN) is a computing model that simulates the human brain to process information, and a convolutional neural network (Convolutional Neural Network, CNN) is a new ANN proposed in the 1990s and has been widely used in the fields of image processing, video processing, natural language processing, and the like. A core operation in the CNN is convolution. In a conventional convolution computing manner, a convolution operation needs to be decomposed into a plurality of vector or matrix multiplication operations, which consumes much computing power.

Optical computing can implement large-scale parallel signal processing and transmission based on a physical property of light, and has advantages, such as a fast computing speed and low power consumption. However, in the conventional technology, on-chip optical convolution based on an optical chip of a cascaded Mach-Zehnder interferometer (Mach-Zehnder Interferometer, MZI) is implemented by decomposing convolution into a plurality of matrix multiplications, and therefore has low computing efficiency.

## SUMMARY

This application provides an optical computing apparatus and system, and a convolution computing method, to improve computing efficiency of a convolutional neural network.

According to a first aspect, an embodiment of the present invention provides an optical computing apparatus, which is applied to the field of artificial neural networks to perform convolution computing. The optical computing apparatus includes a light source array, a modulator array, and a wavelength router. The light source array is configured to send a plurality of groups of optical signals based on first data to be computed, where each group of optical signals includes a plurality of optical signals obtained based on all elements in the first data, and the first data includes a plurality of elements. The modulator array is configured to: receive the plurality of groups of optical signals, and output a plurality of intermediate optical signals based on modulated second data. The wavelength router is configured to: receive the plurality of intermediate optical signals output by the modulator array, and output the plurality of intermediate optical signals from a plurality of output ports based on wavelengths and input ports corresponding to the plurality of intermediate optical signals, where a plurality of optical signals output by the plurality of output ports are used to indicate a computing result of the first data and the second data. In an actual application, the first data may include a vector or a matrix, and the second data may also include a vector or a matrix.

The optical computing apparatus provided in this embodiment of the present invention is an on-chip integrated optical convolution system based on the wavelength router. The computing apparatus can implement a convolution operation at one time without splitting convolution computing into a plurality of matrix multiplication operations. This can improve computing efficiency of convolution computing, and improve performance of a neural network. In addition, a core component in the optical computing apparatus provided in this embodiment of the present invention is the wavelength router. The wavelength router can be designed according to a convolution operation rule. In a process of performing the convolution operation, no external control is required, and no power consumption is generated. Therefore, the optical computing apparatus provided in this embodiment of the present invention can reduce computing power consumption. Further, because a component in the optical computing apparatus provided in this embodiment of the present invention may be an on-chip component, the optical computing apparatus may exist in a form of a chip, and an integration degree is high.

In a possible implementation, a first output port in the plurality of output ports is configured to output at least two intermediate optical signals; and each of the at least two intermediate optical signals is used to indicate a product of an element in the first data and an element in the second data. In an actual application, in a process of implementing convolution of vectors, the wavelength router may route a plurality of intermediate optical signals used to indicate products of elements with a sequence number difference that is the same as a sequence number difference (i-j) of an element $a_i$ in the first data and an element $b_j$ in the second data to a same output port, where i indicates a sequence number of the element $a_i$ in the first data, and j indicates a sequence number of the element $b_j$ in the second data. For example, the wavelength router may route an intermediate optical signal used to indicate a product $a_1b_2$ and an intermediate optical signal used to indicate a product $a_2b_3$ to a same output port.

In another possible implementation, each element in the first data corresponds to an optical signal of one wavelength, and a plurality of optical signals belonging to a same group have different wavelengths.

In still another possible implementation, the wavelength router includes an arrayed waveguide grating router (AWGR) or an etched diffraction grating router (EDGR). The AWGR and the EDGR each are a planar waveguide device that implements a routing function based on multi-beam interference. In addition, the AWGR and the EDGR may be designed in advance according to a convolution operation rule, and no additional control is required during working. Therefore, the AWGR and the EDGR each can be easily implemented on a chip and can save power consumption.

In still another possible implementation, the optical computing device further includes a detector array. The detector array includes a plurality of detectors, configured to detect light intensities of the optical signals at the plurality of output ports of the wavelength router, to obtain the computing result of the first data and the second data. Specifically, the computing result of the first data and the second data includes a result of performing convolution on the first data and the second data.

In still another possible implementation, the modulator array includes the plurality of modulators, and each modulator is configured to: receive one of the plurality of groups of optical signals, and output a plurality of intermediate optical signals based on modulated data.

In still another possible implementation, the light source array includes a light emitting array and an optical splitting device. The light emitting array is configured to separately emit a plurality of optical signals of different wavelengths based on a plurality of elements in the first data, where each optical signal is used to indicate one element in the first data. The optical splitting device is configured to: receive the plurality of optical signals of different wavelengths emitted by the light emitting array, and split the plurality of optical signals of different wavelengths into the plurality of groups of optical signals.

In still another possible implementation, the light emitting array includes a plurality of lasers. The plurality of lasers can send a plurality of optical signals based on the plurality of elements in the first data, where the plurality of optical signals have different wavelengths. In addition, the plurality of optical signals also have different light intensities, and the light intensities of the plurality of optical signals are determined based on values of corresponding elements. The light emitting array is directly implemented by using the laser capable of modulating a light intensity, and the structure is simple.

In still another possible implementation, the light emitting array includes a plurality of lasers and a plurality of modulators. The plurality of lasers are configured to send a plurality of optical signals of different wavelengths. The modulators are configured to: receive the plurality of optical signals of different wavelengths, and respectively modulate the plurality of elements in the first data to the plurality of optical signals of different wavelengths. In this case, the plurality of lasers do not have a light intensity modulation function, and therefore, the plurality of elements in the first data need to be modulated by the modulators on the plurality of optical signals of different wavelengths sent by the lasers. It may be understood that, a light intensity of the optical signal modulated by the modulator is determined by a value of a modulated element.

In still another possible implementation, the light emitting array includes an optical frequency comb source, a wavelength division demultiplexer, and a plurality of modulators. The optical frequency comb source is configured to send an optical signal, where the optical signal includes a plurality of different wavelengths. The wavelength division demultiplexer is configured to: receive the optical signal emitted by the optical frequency comb source, and decompose the optical signal into a plurality of optical signals of different wavelengths. The plurality of modulators are configured to: receive the plurality of optical signals of different wavelengths sent by the wavelength division demultiplexer, and respectively modulate the plurality of elements in the first data to the plurality of optical signals of different wavelengths. In this implementation, the optical frequency comb source, the wavelength division demultiplexer, and the plurality of modulators are all connected through waveguides.

In still another possible implementation, the optical splitting device includes a wavelength division multiplexer and a beam splitter. The wavelength division multiplexer is configured to: receive the plurality of optical signals of different wavelengths emitted by the light emitting array, and combine the plurality of optical signals of different wavelengths into a first group of optical signals. The beam splitter is configured to decompose the first group of optical signals into a plurality of groups of optical signals, where each group of optical signals includes the first group of optical signals.

In still another possible implementation, the optical splitting device includes a planar waveguide, and the planar waveguide is configured to split, in space, the plurality of optical signals of different wavelengths emitted by the light emitting array into the plurality of groups of optical signals.

In still another possible implementation, the optical splitting device includes a light splitting element and a planar waveguide. The light splitting element is configured to split the plurality of optical signals of different wavelengths emitted by the light emitting array into n groups of optical signals, where n is a quantity of elements in the second data, and n is an integer greater than 1. The planar waveguide is configured to transmit the plurality of optical signals of different wavelengths split by the optical splitting device to the modulator array, where the modulator array includes n modulators, and each modulator is configured to receive one of the n groups of optical signals, and each group of optical signals includes the plurality of optical signals of different wavelengths emitted by the light emitting array.

In still another possible implementation, the optical computing apparatus includes a chip. Because a component in the optical computing apparatus provided in embodiments of the present invention may be an on-chip component, the optical computing apparatus may exist in a form of a chip, and an integration degree is high.

According to a second aspect, an embodiment of the present invention provides an optical computing system. The optical computing system includes a processor and the optical computing apparatus according to any one of the first aspect or the implementations of the first aspect that is connected to the processor. The processor is configured to send at least one of first data and second data to the optical computing apparatus.

According to a third aspect, an embodiment of the present invention provides a convolution computing method. The method is performed by the optical computing apparatus according to any one of the first aspect or the implementations of the first aspect.

## BRIEF DESCRIPTION OF DRAWINGS

To describe technical solutions in embodiments of the present invention or in the conventional technology more clearly, the following briefly describes the accompanying drawings for describing embodiments. It is clear that the accompanying drawings in the following description show merely some embodiments of the present invention.

FIG. 1 is a schematic diagram of a structure of an optical computing apparatus according to an embodiment of the present invention;
FIG. 2A is a schematic diagram of a structure of a light source array according to an embodiment of the present invention;
FIG. 2B, FIG. 2C, and FIG. 2D are schematic diagrams of three implementations of a light emitting array according to an embodiment of the present invention;
FIG. 3 is a schematic diagram of a structure of an optical splitting device according to an embodiment of the present invention;
FIG. 4A and FIG. 4B each are a schematic diagram of another structure of an optical splitting device according to an embodiment of the present invention;
FIG. 5A and FIG. 5B each are a schematic diagram of a structure of a wavelength router according to an embodiment of the present invention;
FIG. 6 is a flowchart of a convolution computing method according to an embodiment of the present invention;
FIG. 7 is an example diagram of computing of an optical computing apparatus according to an embodiment of the present invention;
FIG. 8 is a schematic diagram of routing of a wavelength router according to an embodiment of the present invention;
FIG. 9 is an example diagram of convolution computing according to an embodiment of the present invention;
FIG. 10 is a schematic diagram of a routing rule of a wavelength router according to an embodiment of the present invention;
FIG. 11 is a schematic diagram of another optical computing apparatus according to an embodiment of the present invention; and
FIG. 12 is a schematic diagram of a structure of a convolution computing system according to an embodiment of the present invention.

## DESCRIPTION OF EMBODIMENTS

To make a person skilled in the art better understand the technical solutions in the present invention, the following clearly describes the technical solutions in embodiments of the present invention with reference to the accompanying drawings in embodiments of the present invention. It is clear that the described embodiments are merely a part but not all of embodiments of the present invention.

Convolution is a core operation in the field of artificial nerves. Convolution is a result obtained by multiplying two variables in a range to obtain a product and then adding up the products. Specifically, convolution starts from a convolution kernel (which may also be referred to as a weight matrix), so that the convolution kernel gradually "scans" input data. When the convolution kernel "slides", a product of the weight matrix and a scanned data matrix is computed. A convolution computing result (which may also be referred to as output data) is obtained by summarizing computing results. A convolution operation of data A and data B may be expressed as follows: $A \otimes B$. When the data A and the data B each are a vector including a plurality of elements, the convolution operation of the data A and the data B is a convolution operation between vectors. When the data A and the data B each are a matrix including a plurality of elements, the convolution operation of the data A and the data B is a convolution operation between matrices. The data A may be considered as a convolution kernel, the data B may be referred to as input data, and vice versa. A person skilled in the art may know that the convolution kernel usually slides based on a "sliding step", and the "sliding step" is usually 1, or may be set to another value as required. In the field of artificial intelligence (Artificial Intelligence, AI), convolution may be described as $h(step) = \sum_{n} f(n)g(n - step)$. In this description, a vector (or a matrix) h is obtained through convolution of a vector (or a matrix) f and a vector (or a matrix) g, where n is an order used for integration, and step is a sliding step in convolution computing.

An integrated optical circuit (Photonic Integrated Circuit, PIC) generally integrates components such as a light emitting element, a lens, an optical transmission component, an optical modulation component, an optical coupling component, and an optical receiving component onto a same chip by using an optical waveguide. Integrated optics can implement miniaturization and integration of optical systems. Compared with a system composed of discrete optical components, a size, power consumption, and reliability of an integrated photonic chip are greatly improved, and system costs are greatly reduced.

However, in conventional convolution computing, a convolution operation is usually decomposed into a multiplication operation of a plurality of sub-vectors or submatrices, which consumes much computing power. Optical computing is also used to implement convolution computing because of its advantages of high computing speed and low power consumption. However, in an existing solution for implementing convolution by using optical computing, a matrix multiplication operation is usually implemented, and convolution needs to be implemented in a plurality of cycles. Efficiency is still low.

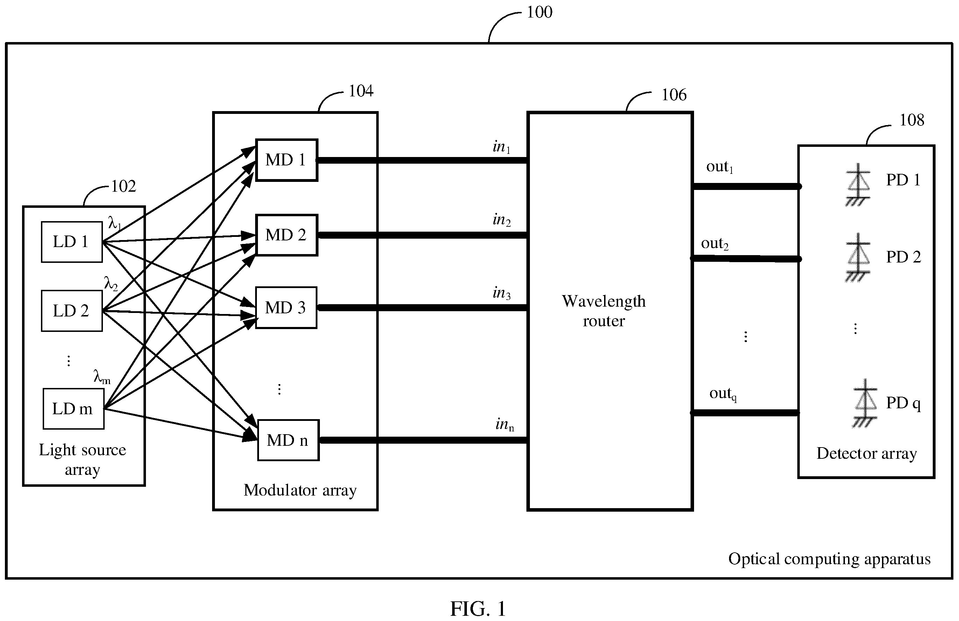

FIG. 1 is an architectural diagram of an optical computing apparatus according to an embodiment of the present invention. The computing apparatus is an on-chip integrated optical computing apparatus based on a wavelength router. As shown in FIG. 1, the computing apparatus 100 may include a light source array 102, a modulator array 104, a wavelength router 106, and a detector array 108.

The light source array 102 may be configured to send a plurality of groups of optical signals based on first data to be computed. The first data may include a plurality of elements, each group of optical signals includes a plurality of optical signals obtained based on all the elements in the first data, and a plurality optical signals belonging to a same group have different wavelengths. For clarity of description, in this embodiment of the present invention, a plurality of optical signals sent to one modulator are referred to as a group of optical signals. Specifically, the light source array 102 may send a plurality of optical signals based on each element in the first data, and optical signals corresponding to different elements have different wavelengths. Assuming that the first data includes $m$ elements, the light source array 102 may send $m$ optical signals of different wavelengths based on the $m$ elements, and split the $m$ optical signals of different wavelengths into a plurality of groups of optical signals based on a quantity of elements in second data. For example, assuming that the first data includes elements $a_1$ and $a_2$, the light source array 102 may send, based on $a_1$, a plurality of optical signals whose wavelengths are $\lambda_1$, and may also send, based on $a_2$, a plurality of optical signals whose wavelengths are $\lambda_2$. The light source array 102 may load data in an intensity modulation manner. For example, different light intensities may be used to represent elements of different values in the first data. After a plurality of optical signals are respectively obtained based on the elements $a_1$ and $a_2$, the plurality of optical signals emitted based on the elements $a_1$ and $a_2$ may be split into a plurality of groups of optical signals. Each group of optical signals includes an optical signal whose wavelength is $\lambda_1$ and an optical signal whose wavelength is $\lambda_2$ that are emitted based on the elements $a_1$ and $a_2$. Assuming that there are four elements in the second data, the plurality of optical signals obtained based on the elements $a_1$ and $a_2$ need to be split into four groups of optical signals, where each group of optical signals includes an optical signal whose wavelength is $\lambda_1$ and an optical signal whose wavelength is $\lambda_2$.

The modulator array 104 can modulate an intensity of incident light, which is equivalent to performing a multiplication operation on an input optical signal. The modulator array 104 is configured to receive the plurality of groups of optical signals, and output a plurality of intermediate optical signals based on the modulated second data. The modulator array 104 may include a plurality of modulators. Each modulator is configured to: receive one of the plurality of groups of optical signals sent by the light source array 102, and separately modulate the plurality of received optical signals based on elements in second data loaded on the modulator, to obtain the plurality of intermediate optical signals. In this manner, each modulator can obtain the plurality of optical signals of different wavelengths sent by the light source array 102, and can separately modulate the plurality of received optical signals of different wavelengths based on the elements loaded on the modulator, to obtain the plurality of intermediate optical signals. A plurality of intermediate optical signals obtained by one modulator are respectively used to indicate products of an element in the second data loaded on the modulator and all the elements in the first data. The plurality of intermediate optical signals obtained by the modulator array 104 are respectively used to indicate products of elements in the first data and elements in the second data. Each intermediate optical signal is used to indicate a product of an element in the first data and an element in the second data.

The modulator array 104 may load the second data in an intensity modulation manner to perform the multiplication operation on the input optical signal. For example, if the first data to be computed includes $m$ ($m \geq 2$) elements and the second data to be computed includes $n$ ($n \geq 2$) elements, each modulator in the modulator array 104 may load one of the $n$ elements, and $n$ modulators in the modulator array 104 may respectively load the $n$ elements in the second data. Each modulator is configured to: receive a group of optical signals sent by the light source array 102, where the group of optical signals includes $m$ optical signals of different wavelengths used to indicate the elements in the first data; and output the plurality of intermediate optical signals based on the modulated data, so as to obtain $n \times m$ intermediate optical signals. The $n \times m$ intermediate optical signals are used to indicate products of elements in the first data and elements in the second data. Each of the $n \times m$ intermediate optical signals is used to indicate a product of an element in the first data and an element in the second data.

In an actual application, the modulator usually performs thermal modulation, electrical modulation, or modulation by using a phase change material. Electrical modulation may be implemented by using structures such as a doped silicon waveguide, an electro-absorption modulator, and a semiconductor optical amplifier (SOA). When the data loaded on the modulator array does not need to change rapidly, a solution such as the phase change material (PCM) may also be used.

The wavelength router 106 is configured to: receive the plurality of intermediate optical signals output by the modulator array, and output the plurality of intermediate optical signals from a plurality of output ports based on the wavelengths and input ports corresponding to the plurality of intermediate optical signals. A plurality of optical signals output by the plurality of output ports are used to indicate a computing result of the first data and the second data. In an actual application, each modulator in the modulator array 104 may correspond to an input port of the wavelength router 106. Specifically, each modulator in the modulator array 104 may be connected to an input port corresponding to the wavelength router 106 through a waveguide. A quantity of modulators in the modulator array 104 may be equal to a quantity of input ports of the wavelength router 106.

The wavelength router 106 is a component for routing an optical signal. The wavelength router 106 may implement a routing function based on multi-beam interference. The wavelength router 106 includes a plurality of input ports and a plurality of output ports. For any input port and any output port, there is an optical signal of one wavelength, to enable that the input port is connected to the output port. In this manner, the wavelength router 106 can determine an output port corresponding to an intermediate optical signal based on a wavelength of the received intermediate optical signal and an input port corresponding to the intermediate optical signal. To implement convolution of the first data and the second data, in this embodiment of the present invention, intermediate optical signals that need to be summed can be routed to a same output port. As described above, one intermediate optical signal is used to indicate a product of an element in the first data and an element in the second data.

It may be understood that at least one output port (for example, a first output port) in the plurality of output ports of the wavelength router 106 may output at least two intermediate optical signals. Each of the at least two intermediate optical signals is used to indicate a product of an element in the first data and an element in the second data. In an actual application, the wavelength router may route a plurality of intermediate optical signals used to indicate products of elements with a sequence number difference that is the same as a sequence number difference (i-j) of an element $a_i$ in the first data and an element $b_j$ in the second data to a same output port, where i indicates a sequence number of the element $a_i$ in the first data, and j indicates a sequence number of the element $b_j$ in the second data. For example, the wavelength router may route an intermediate optical signal used to indicate a product $a_1b_2$ and an intermediate op-

tical signal used to indicate a product $a_2b_3$ to a same output port.

The detector array 108 is configured to detect a light intensity of an optical signal at each output port of the wavelength router 106, to obtain a convolution computing result of the first data and the second data. In this embodiment of the present invention, the detector array 108 may include a plurality of detectors, and one detector is configured to detect a light intensity of an output signal at an output port of the wavelength router 106. Light intensities, of the output signals at the plurality of output ports of the wavelength router 106, detected by the detector array 108 are used to indicate the convolution results of the first data and the second data. It may be understood that, in an actual application, some output ports may output one intermediate optical signal, and some output ports output an optical signal including an aggregation result of a plurality of intermediate optical signals. When an optical signal output by an output port includes the aggregation result of the plurality of intermediate optical signals, the optical signal output by the output port is used to represent a sum of products of the elements in the first data and the elements in the second data. In a specific implementation, the detector array 108 may be implemented by using a semiconductor photodiode array, a photoconductive detector array (for example, a photoresistor array), or the like.

The optical computing apparatus provided in this embodiment of the present invention is an on-chip integrated optical convolution system based on the wavelength router. The computing apparatus can implement a convolution operation at one time without splitting convolution computing into a plurality of matrix multiplication operations. This can improve computing efficiency of convolution computing, and improve performance of a neural network. In addition, a core component in the optical computing apparatus provided in this embodiment of the present invention is the wavelength router. The wavelength router can be designed according to a convolution operation rule. In a process of performing the convolution operation, no external control is required, and no power consumption is generated. Therefore, the optical computing apparatus provided in this embodiment of the present invention can reduce computing power consumption. Further, because a component in the optical computing apparatus provided in this embodiment of the present invention may be an on-chip component, the optical computing apparatus may exist in a form of a chip, and an integration degree is high.

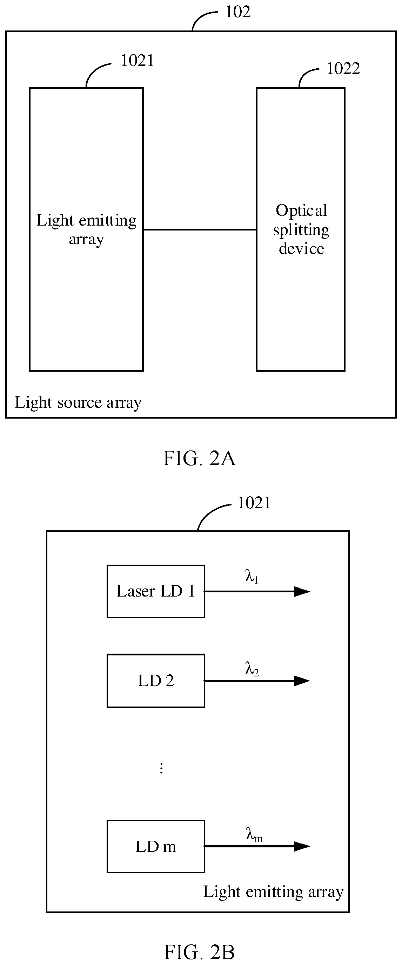

To describe the present invention more clearly, the following describes in detail implementations of each component in the optical computing apparatus provided in this embodiment of the present invention. FIG. 2A is a schematic diagram of a structure of the light source array according to this embodiment of the present invention. As shown in FIG. 2A, the light source array 102 may include a light emitting array 1021 and an optical splitting device 1022. The light emitting array 1021 is configured to separately emit a plurality of optical signals of different wavelengths based on the plurality of elements in the first data, where each optical signal is used to indicate one element in the first data. The light emitting array 1021 may be an array including a plurality of light emitting units. The light emitting unit may include a light emitting component such as a laser (laser diode, LD) and a light emitting diode. The light emitting array 1021 may further demultiplex an optical signal sent by an optical frequency comb source to obtain a plurality of optical signals of different wavelengths. In an actual application, the light source array 102 may load data through direct modulation or external modulation. The optical splitting device 1022 is configured to: receive the plurality of optical signals of different wavelengths emitted by the light emitting array 1021, and split the plurality of optical signals of different wavelengths into the plurality of groups of optical signals, where optical signals in a same group have different wavelengths.

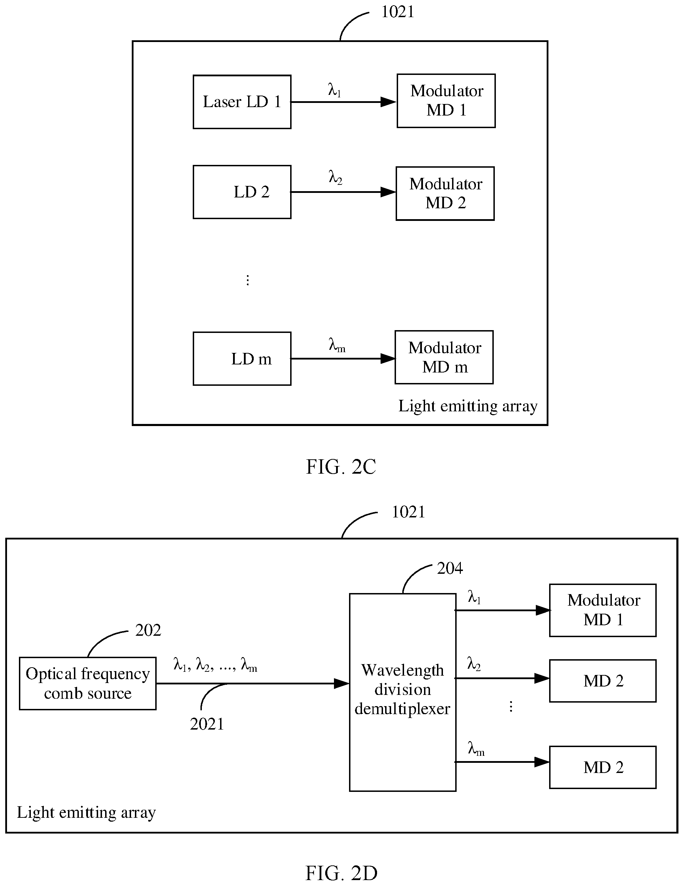

FIG. 2B, FIG. 2C, and FIG. 2D are schematic diagrams of three implementations of the light emitting array 1021 according to this embodiment of the present invention. As describe above, a light source in the light emitting array 1021 may include a laser (LD). As shown in FIG. 2B and FIG. 2C, the light emitting array 1021 may include a plurality of lasers (LDs). For example, m lasers may be included, where m is an integer greater than or equal to 2. In this embodiment of the present invention, wavelengths of light emitted by each laser in the light emitting array 1021 are different, and light emitting intensities may also be modulated. For example, as shown in FIG. 2B and FIG. 2C, a wavelength of an optical signal emitted by a laser LD 1 is $\lambda_1$, and a wavelength of an optical signal emitted by a laser LD 2 is $\lambda_2$.

As described above, the light emitting array 1021 may load the data into an optical signal through direct modulation or external modulation. Direct modulation means that an intensity of light emitted by an LD is directly controlled based on the data to be loaded, and the data is loaded to the optical signal. Different light intensities are used to indicate different data. As shown in FIG. 2B, optical signals sent by the lasers LD 1 and LD 2 have different light intensities, and are used to indicate different elements in the first data. External modulation means that a light intensity or power of an optical signal emitted by an LD is fixed, and then an external modulator is used to change the light intensity and load data to the optical signal. For example, as shown in FIG. 2C, the light emitting array 1021 includes a plurality of lasers LDs and a plurality of modulators (Modulators, MDs), and each laser (LD) may correspond to one modulator (MD). After a laser LD 1 emits a first optical signal whose wavelength is $\lambda_1$, a modulator MD 1 may adjust, based on a first element to be loaded, a light intensity of the first optical signal emitted by the LD 1, so as to load the first element to the first optical signal. Likewise, after a laser LD 2 emits a second optical signal whose wavelength is $\lambda_2$, a modulator MD 2 may modulate, based on a second element to be loaded, a light intensity of the second optical signal emitted by the LD 2, so as to load the second element onto the second optical signal. It may be understood that, in an actual application, a quantity of modulators in the light emitting array 1021 may be the same as a quantity of lasers, or a plurality of lasers may multiplex a same modulator. However, when the plurality of lasers multiplex a same modulator, modulation efficiency may be affected.

As described above, the light emitting array 1021 may also generate a plurality of wavelengths by using an optical frequency comb source and a wavelength division demultiplexer, which may be specifically shown in FIG. 2D. In this embodiment of the present invention, the optical frequency comb source is a light source component, and can generate light at equal intervals of a plurality of frequencies. Specifically, the optical frequency comb source is configured to generate an optical frequency comb. An optical frequency comb, also be referred to as an optical frequency comb, refers to a spectrum formed by a series of frequency components that are evenly spaced and have a coherent and stable phase relationship in a spectrum. The wavelength division demultiplexer can separate these different wavelengths of light. As shown in FIG. 2D, the light emitting array 1021 may include an optical frequency comb source 202, a wavelength division demultiplexer 204, and a plurality of modulators (MDs). The optical frequency comb source 202 may emit optical signals including different wavelengths, for example, optical signals including wavelengths $\lambda_1$ and $\lambda_2$. After receiving the optical signals sent by the optical frequency comb source 210, the wavelength division demultiplexer 204 may decompose the received optical signals into a plurality of optical signals of different wavelengths based on the wavelengths. For example, the optical signals may be decomposed into a first optical signal whose wavelength is $\lambda_1$ and a second optical signal whose wavelength is $\lambda_2$. The wavelength division demultiplexer 204 is connected to the plurality of modulators. For example, if the optical frequency comb source 202 transmits optical signals including m different wavelengths, the wavelength division demultiplexer 204 may be connected to m modulators 206, and the m modulators may be separately connected to the wavelength division demultiplexer 204 through waveguides. Therefore, the m modulators can respectively modulate, based on m elements in the first data, light intensities of the received optical signals sent by the wavelength division demultiplexer 204, so as to respectively modulate the m elements in the first data to the received optical signals. For example, a modulator MD 1 may adjust a light intensity of a first optical signal based on a first element in the first data, so as to modulate the first element to the first optical signal; likewise, a modulator MD 2 may adjust a light intensity of a received second optical signal based on a second element in the first data, so as to modulate the second element to the second optical signal; and so on. It may be understood that a quantity of modulators in the light emitting array 1021 may be the same as a quantity of wavelengths of optical signals sent by the optical frequency comb source 202. Alternatively, a quantity of modulators in the light emitting array 1021 may be different from a quantity of wavelengths of optical signals sent by the optical frequency comb source 202, that is, a plurality of optical signals of different wavelengths may be multiplexed by a same modulator. However, modulation efficiency may be affected in this case.

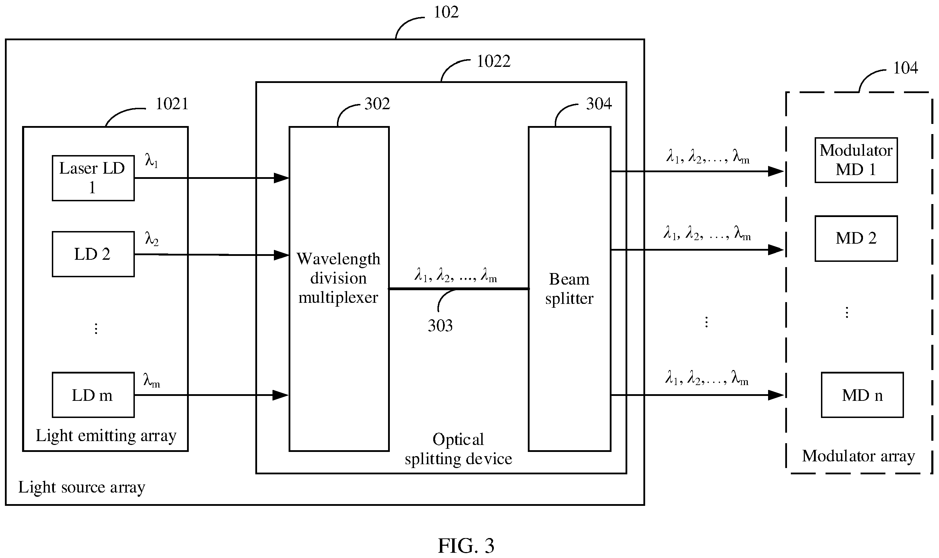

During the convolution operation, each element in the first data to be computed needs to be respectively multiplied by each element in the second data. Therefore, in this embodiment of the present invention, light emitted by each light source is required to be uniformly input to all modulators. Therefore, design of the optical splitting device is also important. In an embodiment of the present invention, the optical splitting device 1022 may split, by using a wavelength division multiplexing solution, the optical signal emitted by the light emitting array, and send the optical signal to each modulator in the modulator array 104. FIG. 3 is a schematic diagram of a structure of the optical splitting device according to this embodiment of the present invention. For clarity of illustration, FIG. 3 illustrates both the light emitting array and the modulator array that are connected to the optical splitting device. As shown in FIG. 3, the optical splitting device 1022 may include a wavelength division multiplexer 302 and a beam splitter 304. A function of the wavelength division multiplexer 302 is to couple the plurality of optical signals of different wavelengths emitted by the light emitting array 1021 to a same waveguide 303. A function of the beam splitter 304 is to: split one channel of input light transmitted through the waveguide 303 to n groups optical signals (without distinguishing wavelengths) with the same power, where each group of light includes a plurality of optical signals of different wavelengths; and transmit the obtained n groups of optical signals to the modulators in the modulator array 104 through waveguides. For example, each group of light may include wavelengths $\lambda_1$, $\lambda_2$, ..., $\lambda_m$. n is determined based on a quantity of modulators in the modulator array 104 or determined based on a quantity of elements in the second data, and n is an integer greater than or equal to 2. Because the plurality of optical signals of different wavelengths emitted by the light emitting array 1021 respectively carry the plurality of elements in the first data to be computed, in this manner, the n groups of optical signals obtained after passing through the wavelength division multiplexer 302 and the beam splitter 304 each includes data carried by the plurality of optical signals whose wavelengths are $\lambda_1$, $\lambda_2$, ..., $\lambda_m$. The optical splitting device shown in FIG. 3 is applicable to an optical computing apparatus including m light sources and n modulators. It may be understood that, when the modulator array 104 is connected through wavelength division multiplexing shown in FIG. 3, components in the entire optical computing apparatus may be connected through waveguides.

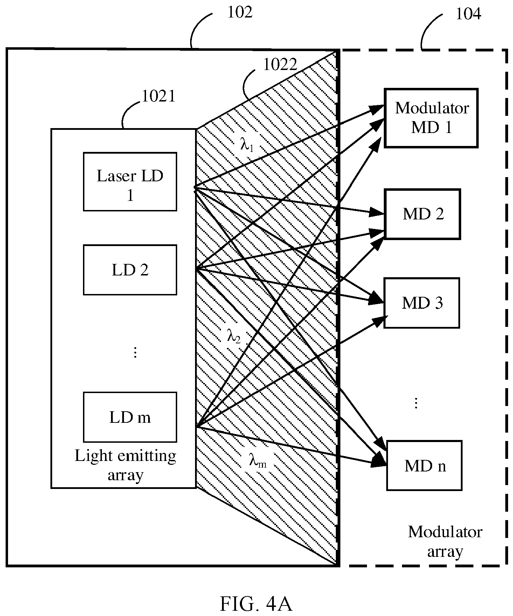

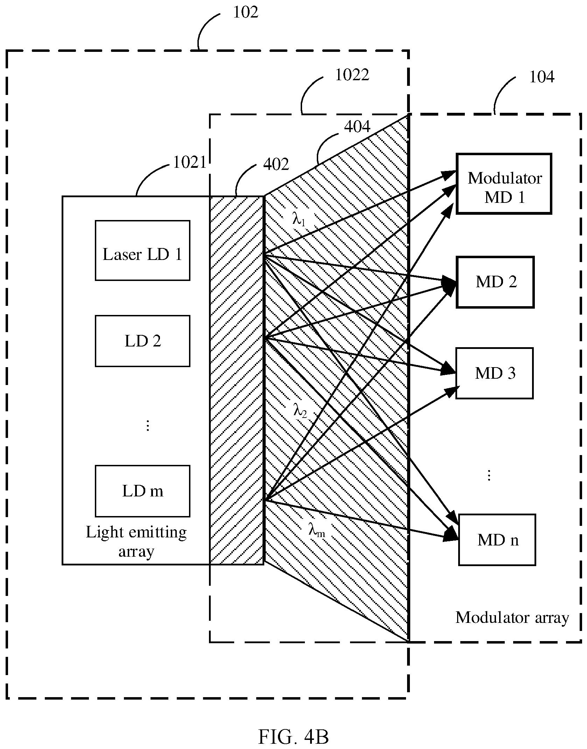

In an actual application, the optical splitting device may further enable, by using an optical splitting structure after the light source, the light emitted by each light source to uniformly input all the modulators. FIG. 4A and FIG. 4B each are a schematic diagram of another structure of the optical splitting device according to this embodiment of the present invention. It should be noted that, for clarity of illustration, the light emitting array and the modulator array are illustrated together in FIG. 4A and FIG. 4B, so that a connection relationship between the light source array and the modulator array can be better understood. In examples shown in FIG. 4A and FIG. 4B, the light emitting array 1021 and the modulator array 104 are not connected through a waveguide, but are connected by using an optical splitting structure of a spatial light system, for example, connected through a planar waveguide. The planar waveguide is a kind of on-chip spatial optical device, and therefore can be well integrated in a chip. In an actual application, in one case, the optical splitting device 1022 shown in FIG. 4A may be a planar waveguide. In this case, the plurality of optical signals of different wavelengths emitted by the light emitting array are transmitted to the plurality of modulators in the modulator array through the planar waveguide space. It should be noted that, when transmission is performed only through the planar waveguide (as shown in FIG. 4A), it is difficult to discretize a light beam, and it is also difficult to implement uniform optical splitting. Therefore, in this case, optical signals received by the modulators in the modulator array 104 are not very uniform.

In another case, as shown in FIG. 4B, the optical splitting device 1022 may include an optical splitting element 402 and a planar waveguide 404. The optical splitting element 402 may be specifically an optical splitting element such as a micro lens array, a Damman grating, and a hypersurface. The optical splitting element 402 is configured to perform discrete and uniform splitting on the plurality of optical signals of different wavelengths emitted by the light emitting array, where the optical signals of each wavelength are discretely and uniformly split into a plurality of optical signals. After discrete splitting of the optical splitting element 402, the plurality of optical signals of different wavelengths may be transmitted to the plurality of modulators in the modulator array 104 through the planar waveguide 404.

In an actual application, the optical splitting device 1022 may be next to the light emitting array 1021, so that the plurality of optical signals of different wavelengths emitted by the light emitting array 1021 can be transmitted in free space of the optical splitting device 1022. This can obtain a plurality of groups of optical signals including different wavelengths. For example, after a first optical signal whose wavelength is $\lambda_1$ emitted by a laser LD 1 passes through the optical splitting device 1022, n optical signals whose wavelengths are $\lambda_1$ can be obtained. The n optical signals whose wavelengths are $\lambda_1$ are respectively sent to n modulators in the modulator array 104, and one modulator is configured to receive an optical signal whose wavelength is $\lambda_1$. In this manner, after passing through the optical splitting device 1022, the plurality of optical signals of different wavelengths emitted by the light emitting array 1021 may be changed into the plurality groups of optical signals, where each group of optical signals includes a plurality of optical signals of different wavelengths. The plurality of groups of optical signals of different wavelengths are separately sent to the plurality of modulators in the modulator array 104, where each modulator needs to receive one of the plurality of groups of optical signals. As described above, in this embodiment of the present invention, a plurality of optical signals received by one modulator are referred to as a group of optical signals.

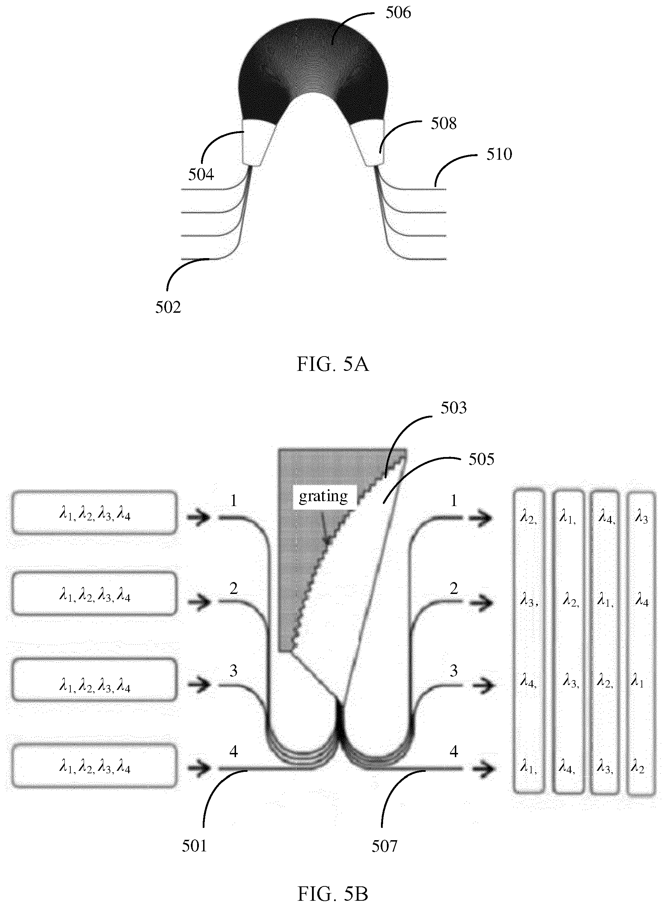

In an actual application, the wavelength router 106 may be an on-chip wavelength router, and the on-chip wavelength router is mainly implemented as the following two manners: an arrayed waveguide grating router (Arrayed Waveguide Grating Router, AWGR) and an etched diffraction grating router (Etched diffraction grating router, EDGR). Working principles of the AWGR and the EDGR are based on multi-beam interference to implement a routing function. There is an optical path difference of $\Delta L$ between adjacent paths of the AWGR and the EDGR. A difference lies in that the optical path difference of the AWGR is introduced by an array waveguide, and the optical path difference of the EDGR is introduced by a grating reflection surface. FIG. 5A and FIG. 5B each are a schematic diagram of a structure of the wavelength router 106 according to this embodiment of the present invention. FIG. 5A is a schematic diagram of the arrayed waveguide grating router (AWGR), and FIG. 5B is a schematic diagram of the etched diffraction grating router (EDGR).

An arrayed waveguide grating (Arrayed Waveguide Grating, AWG) is a planar waveguide device. The AWG has a filtering feature and versatility, can obtain a large quantity of wavelengths and channels and multiplex and demultiplex dozens to hundreds of wavelengths. Therefore, the AWG can also be used as a router. In this embodiment of the present invention, the AWGR refers to an AWG that implements a routing function. Therefore, in this embodiment of the present invention, the AWG refers to the AWGR. A basic structure of the AWGR is shown in FIG. 5A. The AWGR 500 may include an input waveguide 502, an input flat plate region 504, an array waveguide 506, an output flat plate region 508, and an output waveguide 510. The input waveguide 502 is configured to input one or more optical signals. After entering the input flat plate region 504, the input optical signals are freely diffused and entered to the array waveguide 506 at a same phase. Because an optical path difference between adjacent array waveguides is $\Delta L$, phase differences introduced by different waveguides are different. When the light reaches the output flat plate region 508, multi-beam interference occurs and the light is focused on the output waveguide 510. Because the array waveguide 506 introduces different phase differences for light of different wavelengths, the different wavelengths are focused on different positions and output from different output waveguides 510, thereby implementing a routing function.

A basic structure of the EDGR is shown in FIG. 5B, and includes a plurality of input waveguides 501, a flat plate region 505 with a grating reflection surface 503, and a plurality of output waveguides 507. A working principle of the EDGR is similar to that of the AWGR. The input waveguide 501 is configured to input an optical signal. After entering the flat plate region 505, the incident light is freely diffused, is reflected by the grating surface 503, and returns to the flat plate region 505. After diffraction and interference are performed, the incident light is focused to a position of the output waveguide 507. Because different wavelengths correspond to different aggregation positions, a routing function is implemented. For example, as shown in the EDGR in FIG. 5B, an optical signal whose wavelength is $\lambda_1$ received from an input port 1 may be routed to an output port 4 for output, an optical signal whose wavelength is $\lambda_2$ received from the input port 1 may be routed to an output port 1 for output, an optical signal whose wavelength is $\lambda_3$ received from the input port 1 may be routed to an output port 2 for output, and an optical signal whose wavelength is 4 received from the input port 1 may be routed to an output port 3 for output; an optical signal with a wavelength $\lambda_1$ received from an input port 2 may be routed to the output port 1 for output, and so on; and other optical signals are routed in a similar manner.

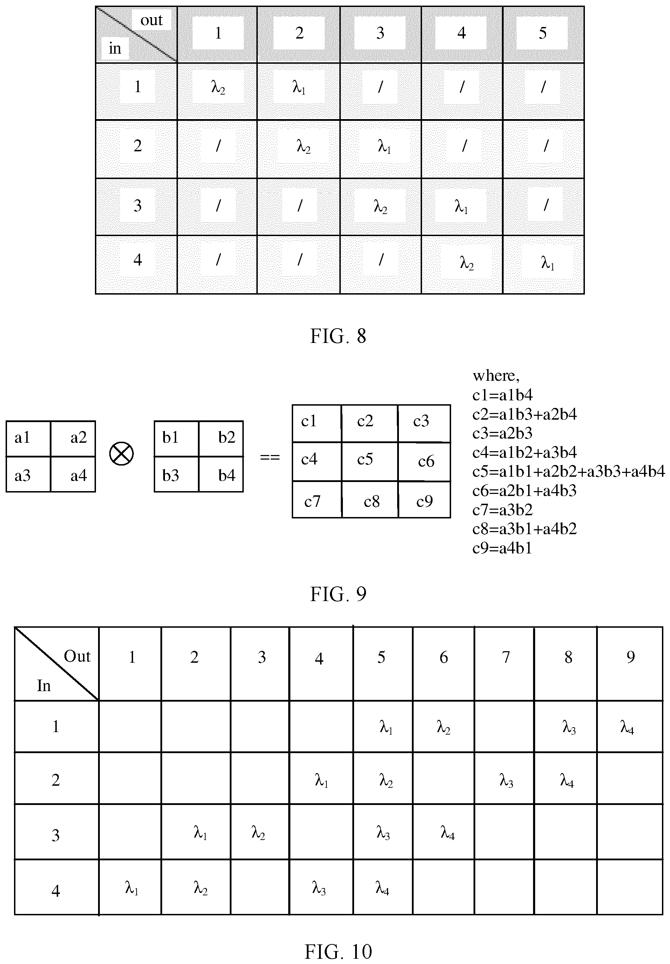

In embodiments of the present invention, the wavelength router can be designed according to a convolution computing rule, and the output port corresponding to the intermediate optical signal can be determined based on the wavelength and the input port corresponding to the received intermediate optical signal. For specific rules, refer to FIG. 8 or FIG. 10. Therefore, in a use process, a convolution computing result can be obtained without additional control on the wavelength router, and computing power consumption is low.

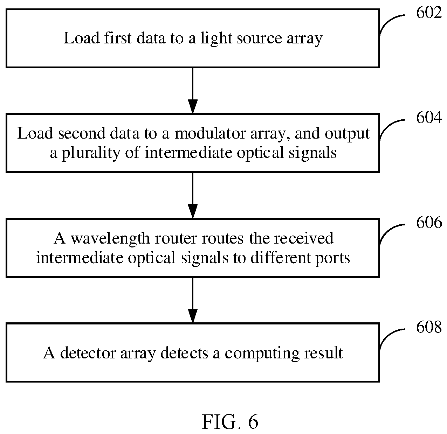

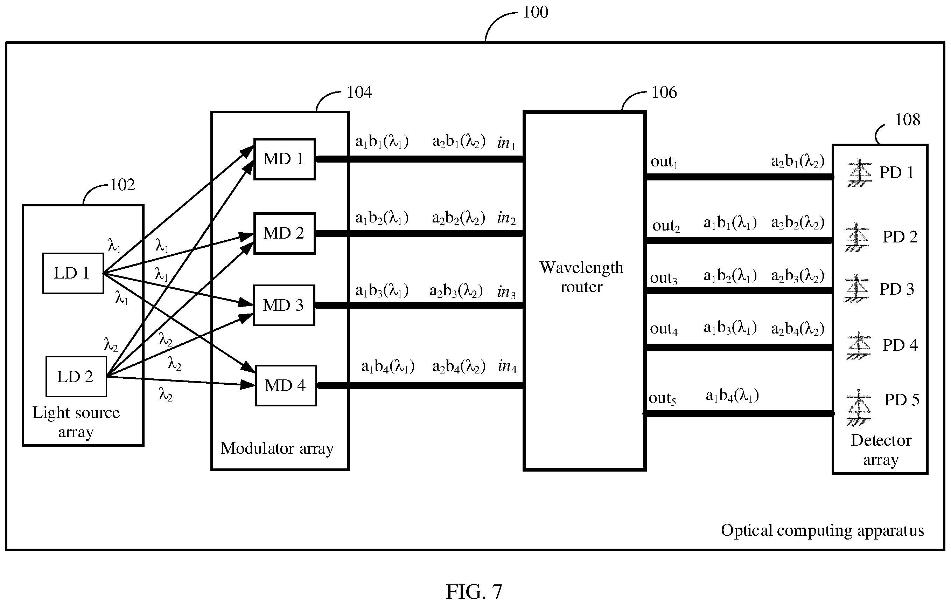

The foregoing describes the structure of the optical computing apparatus provided in embodiments of the present invention. For ease of understanding, the following describes, by using an example, with reference to a computing method shown in FIG. 6 and an example shown in FIG. 7, how the optical computing apparatus provided in embodiments of the present invention implements convolution computing. FIG. 6 is a flowchart of the convolution computing method according to an embodiment of the present invention. The method may be implemented by using the optical computing apparatus shown in FIG. 1. Specifically, in step S602, first data to be computed may be loaded to the light source array 102. Each element $a_i$ in the first data corresponds to one wavelength $\lambda_i$, i may range from 1 to m, and m is a quantity of elements included in the first data. The light source array 102 may emit n optical signals whose wavelengths are $\lambda_1$ based on an element a1 in the first data, or the light source array 102 may emit n optical signals whose wavelengths are $\lambda_2$ based on an element a2 in the first data, where n is a quantity of elements in second data to be computed, and n is an integer greater than or equal to 2. The n optical signals whose wavelengths are $\lambda_1$ and the n optical signals whose wavelengths are $\lambda_2$ may be referred to as n groups of optical signals, where each of the n groups of optical signals includes one optical signal whose wavelength is $\lambda_1$ and one optical signal whose wavelength is $\lambda_2$.

For clarity of description, in this embodiment of the present invention, for example, m=2 and n=4. Specifically, descriptions are provided by using an example in which convolution of the first data [a1, a2] and the second data [b1, b2, b3, b4] is performed. As shown in FIG. 7, the light source array 102 may separately obtain four groups of optical signals based on the first data [a1, a2] to be computed. Each group of optical signals may include an optical signal whose wavelength is $\lambda_1$ obtained based on the element a1 and an optical signal whose wavelength is $\lambda_2$ obtained based on the element a2.

In step S604, the second data to be computed may be loaded to the modulator array 104, and a plurality of intermediate optical signals are output based on the loaded second data. As described above, the modulator array 104 may include a plurality of modulators, and each modulator may load one element in the second data. As described above, for example, the second data includes n elements, each element $b_j$ in the second data may be separately modulated to a modulator $MD_j$ in the modulator array 104, where j may range from 1 to n. For example, as shown in FIG. 7, the second data to be computed includes four elements [$b_1$, $b_2$, $b_3$, $b_4$]. The four elements in the second data are sequentially loaded on four modulators MD 1, MD 2, MD 3, and MD 4.

An optical signal emitted by each light source in the light source array 102 uniformly enters each modulator. In this manner, each modulator in the modulator array 104 receives one of the four groups of optical signals emitted by the light source array 102. In this manner, the modulator array 104 may multiply each element $a_i$ in the first data by each element $b_j$ in the second data based on the second data loaded on each modulator, to generate eight intermediate optical signals in total. The eight intermediate optical signals each are used to indicate a product $a_ib_j$ of an element $a_i$ and an element $b_j$, and a wavelength of each intermediate optical signal may be $\lambda_i$. As shown in FIG. 7, $\lambda_i$ in parentheses indicates that a wavelength of an intermediate optical signal corresponding to the product is $\lambda_i$.

Each modulator in the modulator 104 corresponds to an input port of a wavelength router, and each modulator may be connected to an input port of the wavelength router through a waveguide. In this manner, each element $b_j$ in the second data corresponds to one input port $in_j$ of the wavelength router. Optical signals input from each input port $in_j$ of the wavelength router includes optical signals generated based on all the elements in the first data. Therefore, optical signals input from each input port $in_j$ carry all wavelengths $\lambda_i$. In other words, each input port $in_j$ of the wavelength router 106 needs to receive all optical signals that are emitted by the light source array 102 based on the first data. Because the optical signals input by each input port $in_j$ includes all the wavelengths $\lambda_i$, and a modulator $MD_j$ on the input port $in_j$ corresponding to the optical signals performs a multiplication operation about the element $b_j$ in the second data, a plurality of groups of modulated intermediate optical signals can be obtained. The modulator $MD_j$ obtains the intermediate optical signal indicating a product $a_ib_j$ of the element $a_i$ and the element $b_j$.

In step 606, the wavelength router may route the received intermediate optical signals of different wavelengths to different ports. As described above, the wavelength router 106 may implement a routing function based on multi-beam interference. Specifically, the wavelength router may route the received intermediate optical signal according to a pre-designed routing rule. For example, there are m elements in the first data and n elements in the second data, and a sliding step of convolution is 1. After convolution is performed on the first data and the second data, there are q elements in a convolution result is q, where q=m+n-1. Therefore, when the sliding step of convolution is 1, (m+n-1) output ports of the router may be designed and numbered in sequence. In this case, the routing rule of the wavelength router 106 may be designed as follows: All optical signals corresponding to $a_ib_j$ with an equal sequence number difference (i-j) are routed to a same output port $out_k$, where i may indicate a sequence number of an element in the first data, or may indicate a sequence number of a wavelength corresponding to an optical signal. Likewise, j may indicate a sequence number of an element in the second data, may indicate a sequence number of an input port of the wavelength router, or may indicate a sequence number of a modulator in the modulator array 104. k is a sequence number of an output port, k=m-(i-j), k may range from 1 to q, and q=m+n-1. In an actual application, if only a part of the convolution result is concerned, an output of a redundant output port of the router may be discarded based on this correspondence.

It should be noted that, in the foregoing example, that the sliding step (step) of convolution is 1 is used for description. In an actual application, when the step is not 1, a quantity and change of output ports of the router may be first determined based on a case in which step=1. Then, the redundant output port is discarded according to a principle that an output value at one output port is taken from the quantity of output ports per sliding step. For example, when step=1, there are five output ports: $out_1$ to $out_5$; and when step=2, only optical signals corresponding to three ports: $out_1$, $out_3$, and $out_5$ need to be detected, and outputs of output ports $out_2$ and $out_4$ are discarded. When step=3, only light intensities of optical signals output by output ports $out_1$ and $out_4$ may be detected, or only light intensities of optical signals output

by output ports $out_2$ and $out_5$ may be detected.

Specifically, FIG. 8 is a schematic diagram of a routing rule corresponding to a wavelength router according to an embodiment of the present invention. In FIG. 8, an example in which the first data includes two elements and the second data includes four elements is still used. In this case, the router has four input ports ($in_1$ to $in_4$) and five output ports ($out_1$ to $out_5$). Therefore, eight groups of input data may be reallocated according to a routing rule in the table. For example, light whose wavelength is $\lambda_2$ input from the input port $in_1$ is output from the output port $out_1$. An optical signal whose wavelength is $\lambda_1$ input from the input port $in_1$ is output from the output port $out_2$. In this manner, a total of five groups of optical signals may be output on the five output ports of the wavelength router. It may be understood that, when a plurality of optical signals used to indicate different products are output from one output port, an output optical signal is an optical signal obtained after the plurality of optical signals are aggregated, and the output optical signal is used to indicate a sum of the plurality of products.

For example, as shown in FIG. 7, convolution is performed on the first data [$a_1$, $a_2$] and the second data [$b_1$, $b_2$, $b_3$, $b_4$], where the first data and the second data each are a vector. An output port $out_1$ outputs an optical signal with a wavelength $\lambda_1$ and used to indicate a product $a_2b_1$ of the element $a_2$ and the element $b_1$; an output port $out_2$ outputs an optical signal with a wavelength $\lambda_1$ and used to indicate a product $a_1b_1$ of the element $a_1$ and the element $b_1$ and an optical signal with a wavelength $\lambda_2$ and used to indicate a product $a_2b_2$ of the element $a_2$ and the element $b_2$; an output port $out_3$ outputs an optical signal with a wavelength $\lambda_1$ and used to indicate a product $a_1b_2$ of the element $a_1$ and the element $b_2$ and an optical signal with a wavelength $\lambda2$ and used to indicate a product $a_2b_3$ of the element $a_2$ and the element $b_3$; and so on. Therefore, the convolution result of the first data and the second data obtained from the five output ports of the wavelength router 106 is [$a_2b_1$, $a_1b_1+a_2b_2$, $a_1b_2+a_2b_3$, $a_1b_3+a_2b_4$, $a_1b_4$].

In step 608, the detector array 108 may detect a light intensity of an optical signal at each output port of the wavelength router 106 to obtain the convolution result of the first data and the second data. It may be understood that the optical intensity of the optical signal output by the output port of the wavelength router 106 is directly proportional to the convolution result of the first data and the second data, and a larger value of the convolution result indicates a larger optical intensity of the output optical signal. In an actual application, when the complete convolution operation result is required, light intensities at all the output ports need to be detected. In an actual application, when only a part of the convolution result is concerned, light intensities at some output ports of the wavelength router 106 may be detected.

It can be learned from the foregoing embodiment that, the optical computing apparatus provided in embodiments of the present invention can implement the convolution operation on data. In addition, the optical computing apparatus provided in embodiments of the present invention performs the convolution operation in one step, and does not need to decompose the convolution computing into a plurality of vector multiplications or matrix multiplications for implementation. Therefore, computing efficiency can be improved. In addition, in the optical computing apparatus provided in embodiments of the present invention, the wavelength router can be pre-designed according to the convolution operation rule. No external control is required, and no power consumption is generated. This can reduce computing power consumption. Further, because a component in the optical computing apparatus provided in embodiments of the present invention may be an on-chip component, the optical computing apparatus may exist in a form of a chip, and an integration degree is high.

It should be noted that, in the foregoing embodiment, convolution of the vectors is used as an example for description. Specifically, the light source array and the modulator array each are a line array instead of a planar array. However, in an actual application, an architecture of an optical convolution system provided in embodiments of the present invention may also be used for convolution of matrices. In this case, the light source array and the modulator array each may be a planar array. This is not limited herein.

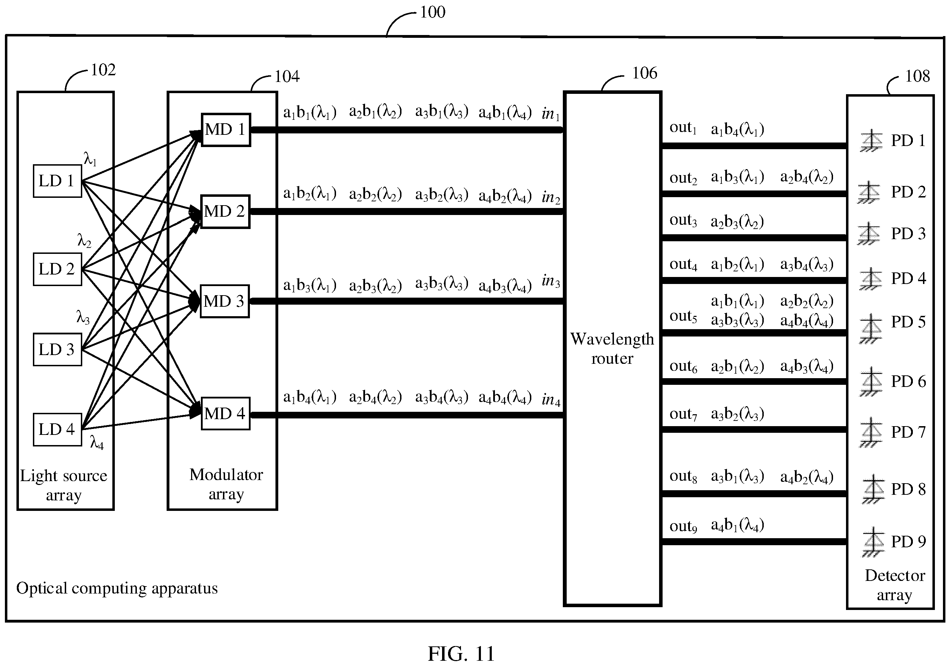

In another implementation provided in embodiments of the present invention, the optical computing apparatus shown in FIG. 1 may implement convolution of matrices. With reference to FIG. 9, FIG. 10, and FIG. 11, the following describes how the optical computing apparatus implements convolution of matrices according to an embodiment of the present invention. FIG. 9 is a schematic diagram of convolution according to this embodiment of the present invention; FIG. 10 is a schematic diagram of a routing rule of the wavelength router according to this embodiment of the present invention; and FIG. 11 is a schematic diagram of how the optical computing apparatus implements convolution of matrices according to this embodiment of the present invention.

As shown in FIG. 9, convolution of a 2×2 matrix and a 2×2 matrix needs to be implemented. First data includes the 2×2 matrix $\begin{bmatrix} a_1 & a_2 \\ a_3 & a_4 \end{bmatrix}$, and second data includes the 2×2 matrix $\begin{bmatrix} b_1 & b_2 \\ b_3 & b_4 \end{bmatrix}$. A person skilled in the art may know that, in convolution computing, to keep a size of input data consistent with a size of output data, before convolution operation is performed, boundary padding may be performed on an original matrix, that is, some values are padded on a boundary of the matrix, to increase a size of the matrix. Padding is usually performed with "0". In a padding manner, when a convolution kernel obtains the input data through scanning, the convolution kernel may extend to a pixel other than an edge of the original image, so that the size of the output data and the size of the input data are the same. In computing of the matrices shown in FIG. 9, the first data $\begin{bmatrix} a_1 & a_2 \\ a_3 & a_4 \end{bmatrix}$ may be used as the convolution kernel, and the second data $\begin{bmatrix} b_1 & b_2 \\ b_3 & b_4 \end{bmatrix}$ may be used as the input data. When padding is performed on the second data and a sliding step is 1, a 3×3 convolution result shown in FIG. 9 may be obtained. In other words, when convolution computing is performed on the two 2×2 matrices, when the input data (for example, the second data) is padded, the 3×3 computing result is obtained after the convolution computing is performed on the input data based on the convolution kernel (for example, the first data). The convolution result includes nine elements. In this case, the routing rule of the wavelength router in this embodiment of the present invention may be designed based on the example of convolution of the matrices shown in FIG. 9. Specifically, the routing rule may be shown in FIG. 10.

With reference to FIG. 11, the following describes in detail how the optical computing apparatus provided in this embodiment of the present invention implements convolution computing shown in FIG. 9. As shown in FIG. 11, the light source array 102 may emit a plurality of optical signals based on elements in the first data. Because the second data includes four elements, four modulators in the modulator array 104 are required to load the elements in the second data. One modulator is configured to load one element. To enable the optical signals emitted by the light source array 102 to be sent to each modulator that is in the modulator array 104 and that modulates the element in the second data, in a computing process, the light source array 102 may separately send four groups of optical signals based on the elements $a_1$, $a_2$, $a_3$, and $a_4$ in the first data. Each group of optical signals includes four optical signals of different wavelengths emitted based on all the elements in the first data, so that each modulator can receive one group of optical signals. For example, the light source array 102 may send four optical signals whose wavelengths are $\lambda_1$ based on the element $a_1$, send four optical signals whose wavelengths are $\lambda_2$ based on the element a2, and so on. Each modulator receives one group of optical signals. Therefore, the plurality of optical signals emitted by the light source array 102 based on the first data may include four groups of optical signals. Each group of optical signals includes an optical signal whose wavelength is $\lambda_1$ emitted based on the element $a_1$, an optical signal whose wavelength is $\lambda_2$ emitted based on the element a2, an optical signal whose wavelength is $\lambda_3$ emitted based on the element a3, and an optical signal whose wavelength is $\lambda_4$ based on the element a4. Specifically, as shown in FIG. 11, the plurality of optical signals of different wavelengths emitted by the light source array 102 based on the elements in the first data are separately sent to the modulators in the modulator array 104.

Still as shown in FIG. 11, after the elements [b1, b2, b3, b4] in the second data are separately loaded to the modulators in the modulator array 104, after the modulators in the modulator array 104 separately receive the optical signal sent by the light source array 102, 4×4=16 intermediate optical signals are generated, and the 16 intermediate optical signals are used to indicate products of the four elements in the first data and the four elements in the second data. The 16 intermediate optical signals emitted by the four modulators in the modulator array 104 are input to the wavelength router 106. After receiving the 16 intermediate optical signals sent by the modulator array, the wavelength router 106 routes the received 16 intermediate optical signals to different output ports according to the routing rule shown in FIG. 10 and based on wavelengths and input ports corresponding to the 16 intermediate optical signals, and a total of nine outputs are obtained, where a light intensity of an optical signal at each output port is used to represent an element c in the convolution result, so that the convolution result $\begin{bmatrix} c_1 & c_2 & c_3 \\ c_4 & c_5 & c_6 \\ c_7 & c_8 & c_9 \end{bmatrix}$ shown in FIG. 9 can be obtained.

It should be noted that, in convolution shown in FIG. 9, that the input data is padded as an example. If the input data does not need to be padded, that is, if the size of the output data is not required to be consistent with that of the input data, padding may not be performed on the input data. In this case, the convolution result includes only one element, that is, the convolution result is equal to $a_1b_1+a_2b_2+a_3b_3+a_4b_4=c_5$. In this case, the convolution result may be obtained by detecting only a light intensity of an optical signal at a fifth output port of the wavelength router 106.

It can be learned from the foregoing embodiments that, no matter implementing convolution of vectors or convolution of matrices, the optical computing apparatus provided in embodiments of the present invention does not need to divide convolution computing into a plurality of matrix multiplication operations for execution, but completes convolution computing in one step. Convolution computing does not need to be decomposed into a plurality of vector multiplications or matrix multiplications for implementation. Therefore, computing efficiency can be improved. In an actual application, the optical computing apparatus provided in embodiments of the present invention may exist in a form of a chip.

It should be noted that, according to the optical computing apparatus provided in embodiments of the present invention, the light source array and the modulator array may be designed according to a design requirement (for example, a chip size and a quantity of components), to maximize use of various components such as the light emitting device, the modulator, and the detector. In other words, quantities of components such as light emitting devices, modulators, and detectors in the optical computing apparatus provided in embodiments of the present invention are not limited by specific elements in data to be convolved. It may be understood that, when a quantity of elements in the data to be computed is greater than a quantity of lasers or modulators in the optical computing apparatus, the data to be computed may be split into a plurality of pieces of data that can be computed for computing; or when the quantity of elements in the data to be computed is less than a quantity of lasers or modulators in the optical computing apparatus, only some lasers, some modulators, some detectors, and the like in the optical computing apparatus may be used for computing.

It should be further noted that, the optical computing apparatus provided in embodiments of the present invention may also perform $1\times1$ convolution, that is, the first data or the second data may include only one element. For example, a quantity of weights in a convolution kernel may include one weight (or one element), that is, m=1 in the foregoing embodiment. In this case, in one manner, data including one element may be padded with data including a plurality of elements in a padding manner. For example, "0" may be padded to pad the data as the data including the plurality of elements. In another manner, the data may not be padded, and computing may be directly performed. In a computing process, some lasers (for example, one laser), some modulators, or some detectors may participate in the computing process. The optical computing apparatus provided in embodiments of the present invention is not affected by a data volume of the computed data, and can perform computing regardless of the data volume to be computed.

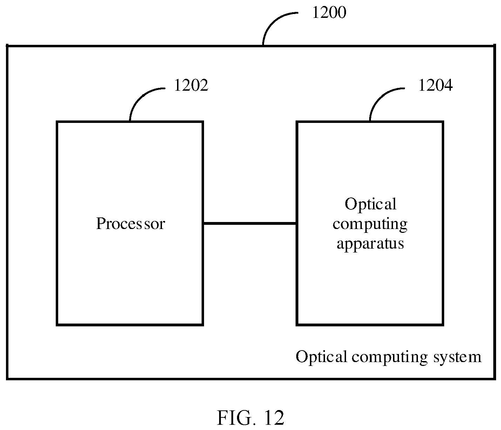

FIG. 12 is a schematic diagram of a structure of an optical computing system according to an embodiment of the present invention. As shown in FIG. 12, the optical computing system 1200 may include a processor 1202 and an optical computing apparatus 1204, and the optical computing apparatus 1204 may be the optical computing apparatus in the foregoing embodiment, for example, may be the optical computing apparatus shown in FIG. 1. In an actual application, the optical computing apparatus 1204 may exist in a form of a chip, or the optical computing apparatus 1204 may be used as a neural network acceleration apparatus, and is specially configured to perform convolution computing or another neural network computing.

The processor 1202 is an operation core and a control core (Control Unit) of the optical computing system 1200. The processor 1202 may include a plurality of processor cores (cores). The processor 1202 may be a very large scale integrated circuit. An operating system and another software program are installed in the processor 1202, so that the processor 1202 can implement access to a memory, a cache, an optical computing apparatus, and the like. In this embodiment of the present invention, the processor 1202 may be a central processing unit (central processing unit, CPU), an application-specific integrated circuit (application-specific integrated circuit, ASIC), a field programmable gate array (field programmable gate array, FPGA), an artificial intelligence (artificial intelligence, AI) chip, a system on chip (system on chip, SoC) or a complex programmable logic device (complex programmable logic device, CPLD), a graphics processing unit (graphics processing unit, GPU), or the like.

In an actual application, the processor 1202 may be configured to input, to the optical computing apparatus 1204, data on which convolution computing is to be performed. An example in which the first data is the convolution kernel, and the second data is the input data in the foregoing embodiment is used. The processor 1202 may input the first data and the second data to the convolution computing apparatus 1204. In one case, when the optical computing apparatus provided in this embodiment of the present invention is used in a photographing device, and directly performs image processing through convolution, the first data may alternatively be input to the convolution computing apparatus 1204 only by using the processor 1202. The second data may be directly obtained by using an optical signal when a picture is photographed. For details about how the optical computing system implements convolution computing, refer to the description in the foregoing embodiment. Details are not described herein again.

An embodiment of the present invention further provides a computer program product for implementing the foregoing convolution computing method. In addition, an embodiment of the present invention also provides a computer program product for implementing the foregoing convolution computing method. Each of the computer program products includes a computerreadable storage medium storing program code. Instructions included in the program code are used for executing the method procedure described in any one of the foregoing method embodiments. A person of ordinary skill in the art may understand that, the foregoing storage medium includes various non-transitory (non-transitory) machine readable media that can store program code, such as a USB flash drive, a removable hard disk, a magnetic disk, an optical disc, a random access memory (Random-Access Memory, RAM), a solid-state drive (Solid State Disk, SSD), or a non-volatile memory (non-volatile memory).

It should be noted that embodiments provided in this application are merely examples. A person skilled in the art may clearly know that, for convenience and conciseness of description, in the foregoing embodiments, embodiments emphasize different aspects, and for a part not described in detail in one embodiment, refer to related descriptions in another embodiment. Features disclosed in embodiments, claims, and accompanying drawings of the present invention may exist independently or exist in a combination. Features described in a hardware form in embodiments of the present invention may be executed by software, and vice versa. This is not limited herein.

**Claims**

1. An optical computing apparatus, comprising:

   a light source array, configured to send a plurality of groups of optical signals based on first data to be computed, wherein each group of optical signals comprises a plurality of optical signals obtained based on all elements in the first data;
   a modulator array, configured to: receive the plurality of groups of optical signals, and output a plurality of intermediate optical signals based on modulated second data; and
   a wavelength router, configured to: receive the plurality of intermediate optical signals output by the modulator array, and output the plurality of intermediate optical signals from a plurality of output ports based on wavelengths and input ports corresponding to the plurality of intermediate optical signals, wherein a plurality of optical signals output by the plurality of output ports are used to indicate a computing result of the first data and the second data.

2. The optical computing apparatus according to claim 1, wherein a first output port in the plurality of output ports is configured to output at least two intermediate optical signals; and each of the at least two intermediate optical signals is used to indicate a product of an element in the first data and an element in the second data.

3. The optical computing apparatus according to claim 1 and 2, wherein each element in the first data corresponds to an optical signal of one wavelength, and a plurality of optical signals belonging to a same group have different wavelengths.

4. The optical computing apparatus according to any one of claims 1 to 3, wherein the wavelength router comprises an arrayed waveguide grating router (AWGR) or an etched diffraction grating router (EDGR).

5. The optical computing apparatus according to any one of claims 1 to 4, further comprising:
   a detector array, comprising a plurality of detectors, and configured to detect light intensities of the optical signals at the plurality of output ports of the wavelength router, to obtain the computing result of the first data and the second data.

6. The optical computing apparatus according to any one of claims 1 to 5, wherein the light source array comprises:

   a light emitting array, configured to separately emit a plurality of optical signals of different wavelengths based on a plurality of elements in the first data, wherein each optical signal is used to indicate one element in the first data; and
   an optical splitting device, configured to: receive the plurality of optical signals of different wavelengths emitted by the light emitting array, and split the plurality of optical signals of different wavelengths into the plurality of groups of optical signals.

7. The optical computing apparatus according to claim 6, wherein the light emitting array comprises:
   a plurality of lasers, configured to send a plurality of optical signals based on the plurality of elements in the first data, wherein the plurality of optical signals have different wavelengths.

8. The optical computing apparatus according to claim 6, wherein the light emitting array comprises:

   a plurality of lasers, configured to send a plurality of optical signals of different wavelengths; and
   a plurality of modulators, configured to: receive the plurality of optical signals of different wavelengths, and respectively modulate the plurality of elements in the first data to the plurality of optical signals of different wavelengths.

9. The optical computing apparatus according to claim 6, wherein the light emitting array comprises:

   an optical frequency comb source, configured to send an optical signal, wherein the optical signal comprises a plurality of different wavelengths;
   a wavelength division demultiplexer, configured to: receive the optical signal emitted by the optical frequency comb source, and decompose the optical signal into a plurality of optical signals of different wavelengths; and
   a plurality of modulators, configured to: receive the plurality of optical signals of different wavelengths sent by the wavelength division demultiplexer, and respectively modulate the plurality of elements in the first data to the plurality of optical signals of different wavelengths.

10. The optical computing apparatus according to claim 6, wherein the optical splitting device comprises:

    a wavelength division multiplexer, configured to: receive the plurality of optical signals of different wavelengths emitted by the light emitting array, and combine the plurality of optical signals of different wavelengths into a first group of optical signals; and
    a beam splitter, configured to decompose the first group of optical signals into a plurality of groups of optical signals, wherein each group of optical signals comprises the first group of optical signals.

11. The optical computing apparatus according to claim 6, wherein the optical splitting device comprises:
a planar waveguide, configured to split, in space, the plurality of optical signals of different wavelengths emitted by the light emitting array into the plurality of groups of optical signals.

12. The optical computing apparatus according to claim 6, wherein the optical splitting device comprises:

an optical splitting element, configured to split the plurality of optical signals of different wavelengths emitted by the light emitting array into n groups of optical signals, wherein n is a quantity of elements in the second data, and n is an integer greater than 1; and
a planar waveguide, configured to transmit the plurality of optical signals of different wavelengths split by the optical splitting device to the modulator array, wherein the modulator array comprises n modulators, and each modulator is configured to receive one of the n groups of optical signals, and each group of optical signals comprises the plurality of optical signals of different wavelengths emitted by the light emitting array.

13. The optical computing apparatus according to any one of claims 1 to 12, wherein the modulator array comprises the plurality of modulators, and each modulator is configured to: receive one of the plurality of groups of optical signals, and output a plurality of intermediate optical signals based on modulated data.

14. The optical computing apparatus according to any one of claims 1 to 13, wherein the computing result of the first data and the second data comprises a result of convolution performed on the first data and the second data.

15. The optical computing apparatus according to any one of claims 1 to 14, wherein the optical computing apparatus comprises a chip.

16. An optical computing system, comprising a processor and the optical computing apparatus according to any one of claims 1 to 15 that is connected to the processor, wherein the processor is configured to send at least one of first data and second data to the optical computing apparatus.

17. A convolution computing method, wherein the method is performed by an optical computing apparatus, and the method comprises:

sending, by a light source array in the optical computing apparatus, a plurality of groups of optical signals based on first data to be computed, wherein each group of optical signals comprises a plurality of optical signals obtained based on all elements in the first data, and the first data comprises a plurality of elements;
receiving, by a modulator array in the optical computing apparatus, the plurality of groups of optical signals, and outputting a plurality of intermediate optical signals based on modulated second data; and
receiving, by a wavelength router in the optical computing apparatus, the plurality of intermediate optical signals output by the modulator array, and outputting the plurality of intermediate optical signals from a plurality of output ports based on wavelengths and input ports corresponding to the plurality of intermediate optical signals, wherein a plurality of optical signals output by the plurality of output ports are used to indicate a computing result of the first data and the second data.

18. The convolution computing method according to claim 17, wherein
a first output port in the plurality of output ports is configured to output at least two intermediate optical signals; and each of the at least two intermediate optical signals is used to indicate a product of an element in the first data and an element in the second data.

19. The convolution computing method according to claim 17 and 18, wherein
each element in the first data corresponds to an optical signal of one wavelength, and a plurality of optical signals belonging to a same group have different wavelengths.

20. The convolution computing method according to any one of claims 17 to 19, further comprising:
detecting, by a detector array in the optical computing apparatus, light intensities of the optical signals at the plurality of output ports of the wavelength router, to obtain the computing result of the first data and the second data.

FIG. 1

~ 102

1021

1022

| Light emitting array | | Optical splitting device |

Light source array

FIG. 2A

~ 1021

Laser LD 1 → $\lambda_1$

LD 2 → $\lambda_2$

⋮

LD m → $\lambda_m$

Light emitting array

FIG. 2B

1021

FIG. 2C

1021

FIG. 2D

FIG. 3

FIG. 4A

102

1022

104

404

1021

402

Modulator
MD 1

Laser LD 1

$\lambda_1$

MD 2

LD 2

MD 3

⋮

$\lambda_2$

LD m

Light emitting
array

$\lambda_m$

⋮

MD n

Modulator array

FIG. 4B

FIG. 5A

FIG. 5B

```
┌─────────────────────────────────────────┐ ┌─ 602
│     Load first data to a light source array     │
└─────────────────────────────────────────┘
                    │
                    ▼
┌─────────────────────────────────────────┐ ┌─ 604
│  Load second data to a modulator array, and output │
│     a plurality of intermediate optical signals    │
└─────────────────────────────────────────┘
                    │
                    ▼
┌─────────────────────────────────────────┐ ┌─ 606
│        A wavelength router routes the received      │
│     intermediate optical signals to different ports │
└─────────────────────────────────────────┘
                    │
                    ▼
┌─────────────────────────────────────────┐ ┌─ 608
│        A detector array detects a computing result  │
└─────────────────────────────────────────┘
```

FIG. 6

FIG. 7

| in \ out | 1 | 2 | 3 | 4 | 5 |
|---|---|---|---|---|---|
| 1 | $\lambda_2$ | $\lambda_1$ | / | / | / |
| 2 | / | $\lambda_2$ | $\lambda_1$ | / | / |
| 3 | / | / | $\lambda_2$ | $\lambda_1$ | / |
| 4 | / | / | / | $\lambda_2$ | $\lambda_1$ |

FIG. 8

| a1 | a2 |
|---|---|
| a3 | a4 |

$\otimes$

| b1 | b2 |
|---|---|
| b3 | b4 |

$==$

| c1 | c2 | c3 |
|---|---|---|
| c4 | c5 | c6 |
| c7 | c8 | c9 |

where,
c1=a1b4
c2=a1b3+a2b4
c3=a2b3
c4=a1b2+a3b4
c5=a1b1+a2b2+a3b3+a4b4
c6=a2b1+a4b3
c7=a3b2
c8=a3b1+a4b2
c9=a4b1

FIG. 9

| In \ Out | 1 | 2 | 3 | 4 | 5 | 6 | 7 | 8 | 9 |
|---|---|---|---|---|---|---|---|---|---|
| 1 | | | | | $\lambda_1$ | $\lambda_2$ | | $\lambda_3$ | $\lambda_4$ |
| 2 | | | | $\lambda_1$ | $\lambda_2$ | | $\lambda_3$ | $\lambda_4$ | |
| 3 | | $\lambda_1$ | $\lambda_2$ | | $\lambda_3$ | $\lambda_4$ | | | |
| 4 | $\lambda_1$ | $\lambda_2$ | | $\lambda_3$ | $\lambda_4$ | | | | |

FIG. 10

FIG. 11

1200

1202

1204

Processor

Optical
computing
apparatus

Optical computing system

FIG. 12

## INTERNATIONAL SEARCH REPORT

International application No.

**PCT/CN2021/124511**

### A. CLASSIFICATION OF SUBJECT MATTER

G06N 3/067(2006.01)i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 波长, 卷积, 矩阵, 路由, 乘法, 路由器, 光, 乘积, multiple, matrix, convolution, optical

### C. DOCUMENTS CONSIDERED TO BE RELEVANT

| Category* | Citation of document, with indication, where appropriate, of the relevant passages | Relevant to claim No. |
|---|---|---|
| X | CN 111882052 A (PEKING UNIVERSITY) 03 November 2020 (2020-11-03) description paragraphs [0025]-[0082], figure 1 | 1-20 |
| A | CN 109639359 A (SHANGHAI JIAO TONG UNIVERSITY) 16 April 2019 (2019-04-16) entire document | 1-20 |
| A | CN 109784485 A (INSTITUTE OF COMPUTING TECHNOLOGY, CHINESE ACADEMY OF SCIENCES) 21 May 2019 (2019-05-21) entire document | 1-20 |
| A | US 2007086655 A1 (MICROSOFT CORP.) 19 April 2007 (2007-04-19) entire document | 1-20 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 January 2022** | **19 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/124511**

| Patent document cited in search report | | | Publication date (day/month/year) | Patent family member(s) | Publication date (day/month/year) |
|---|---|---|---|---|---|
| CN | 111882052 | A | 03 November 2020 | None | |
| CN | 109639359 | A | 16 April 2019 | None | |
| CN | 109784485 | A | 21 May 2019 | None | |
| US | 2007086655 | A1 | 19 April 2007 | None | |

Form PCT/ISA/210 (patent family annex) (January 2015)

**EP 4 276 697 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110502270